# NEUE EUROPÄISCHE PATENTSCHRIFT

(11) **EP 1 508 424 B2**
(45) Veröffentlichungstag und Bekanntmachung des Hinweises auf die Entscheidung über den Einspruch: **26.10.2016**
(45) Hinweis auf die Patenterteilung: 07.07.2010
(21) Anmeldenummer: 03019034.2
(22) Anmeldetag: 22.08.2003
(51) Int. Cl.: B29C 47/40, B29C 47/60, B29C 47/64, B29B 7/42

(54) **Schneckenmaschine mit Misch- und Knet-Scheiben**
Screw machine having mixing and kneading discs
Machine à vis-sans-fin avec disques de pétrissage et malaxage

(43) Veröffentlichungstag der Anmeldung: 23.02.2005
(73) Patentinhaber: Coperion GmbH, 70469 Stuttgart (DE)
(72) Erfinder: Herter, Rainer, 74199 Untergruppenbach (DE)
(74) Vertreter: Rau, Manfred

(56) Entgegenhaltungen:
- EP-A1- 0 522 390
- EP-B1- 0 160 124
- EP-B1- 0 970 529
- EP-B1- 1 121 238
- EP-B1- 1 324 869
- WO-A-02/070231
- DE-A1- 3 047 314
- FR-A- 2 175 937
- JP-A- H0 970 872
- JP-A- H10 180 842
- US-A- 5 728 337
- US-B1- 6 170 975

## Beschreibung

Die Erfindung betrifft eine Schneckenmaschine nach dem Oberbegriff des Anspruches 1.

Derartige Schneckenmaschinen mit derartigen Misch- und Knet-Scheiben sind umfangreich bekannt, beispielsweise aus der EP 0 875 356 B1 (entsprechend US 6,048,088), der EP 0 160 124 (entsprechend US 4,824,256) und der EP 1 121 238 B1 (entsprechend US 09/806 605). Bei diesen bekannten Schneckenmaschinen sind jeweils mehrere hintereinander auf einer Schneckenwelle angeordnete Misch- und Knet-Scheiben zu jeweils einem Knetblock zusammengefasst. Diese Knetblöcke sind so ausgestaltet, dass der Kamm-Versatz-Winkel zwischen benachbarten Knetscheiben jeweils ganzzahlig in 360° enthalten ist. Darüber hinaus sind die erste und die letzte Misch- und Knet-Scheibe eines Knetblockes häufig deckungsgleich zueinander angeordnet. Bei Knetblöcken mit fünf hintereinander ausgebildeten Misch- und Knet-Scheiben und 2-gängiger Ausgestaltung sind beispielsweise hintereinander angeordnete Misch- und Knet-Scheiben mit einem Kamm-Versatz-Winkel von 45° zueinander vorhanden.

Aus der US 5 728 337 ist eine Schneckenmaschine mit mehreren hintereinander angeordneten Misch- und Knetscheiben bekannt, wobei die erste und die letzte Misch- und Knetscheibe deckungsgleich angeordnet sind. Der Kamm-Versatz-Winkel zwischen zwei hintereinander angeordneten Misch- und Knet-Scheiben liegt im Bereich von 18 bis 30°, wobei der Kamm-Versatz-Winkel ganzzahlig in 360° enthalten ist.

Aufgrund der sich beim Drehen der Schneckenwelle und damit der Misch- und Knet-Scheiben verändernden Eingriffsstellungen der Misch- und Knet- Scheiben eines Paares von Misch- und Knet-Scheiben ergeben sich über eine Drehbewegung unterschiedliche an der jeweiligen Schneckenwelle angreifende Drehmomente. Bei der geschilderten bekannten Ausgestaltung und Anordnung der Misch- und Knet-Scheiben ergeben sich Drehmomentstöße, die dadurch verstärkt werden, dass bei den geschilderten symmetrischen Knetblöcken eine deckungsgleiche Stellung von Misch- und Knet-Scheiben gleichzeitig mehrfach auftritt. Dies führt dazu, dass im Resonanzfall erhebliche Schwingungsbelastungen im gesamten Antriebsstrang auftreten können. Zum Antriebsstrang gehören alle drehenden Teile des Antriebs-Motors, der Kupplung und des Getriebes und die Schnecken-Wellen mit Misch- und Knet-Scheiben und gegebenenfalls Schneckenelementen.

Der Erfindung liegt die Aufgabe zugrunde, die Schneckenmaschine derart weiterzubilden, dass die Schwingungsprobleme zumindest verringert werden.

Diese Aufgabe wird erfindungsgemäß durch die Merkmale im Kennzeichnungsteil des Anspruches 1 gelöst.

Durch die erfindungsgemäße Ausgestaltung wird erreicht, dass auch bei Anordnung einer größeren Zahl von Misch- und Knet-Scheiben hintereinander keine gleichzeitigen Drehmomentstöße auftreten können, die zu unzulässig hohen Amplituden im Bereich von Resonanzstellen des Antriebsstranges führen. Dadurch, dass keine der hintereinander angeordneten Misch- und Knetscheiben deckungsgleich zueinander angeordnet sind, wird der erfindungsgemäß angestrebte Effekt noch besser erreicht.

Die weiteren Unteransprüche beinhalten vorteilhafte Weiterbildungen der Erfindung.

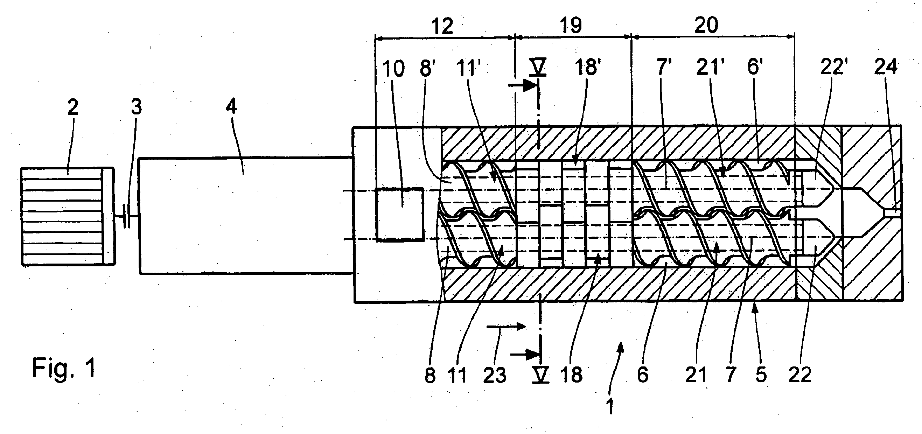

Weitere Merkmale, Einzelheiten und Vorteile der Erfindung ergeben sich aus der nachfolgenden Beschreibung eines Ausführungsbeispiels anhand der Zeichnung. Es zeigt
- Fig. 1: eine Draufsicht auf eine teilweise aufgebrochen dargestellte Schneckenmaschine in schematischer Darstellung,

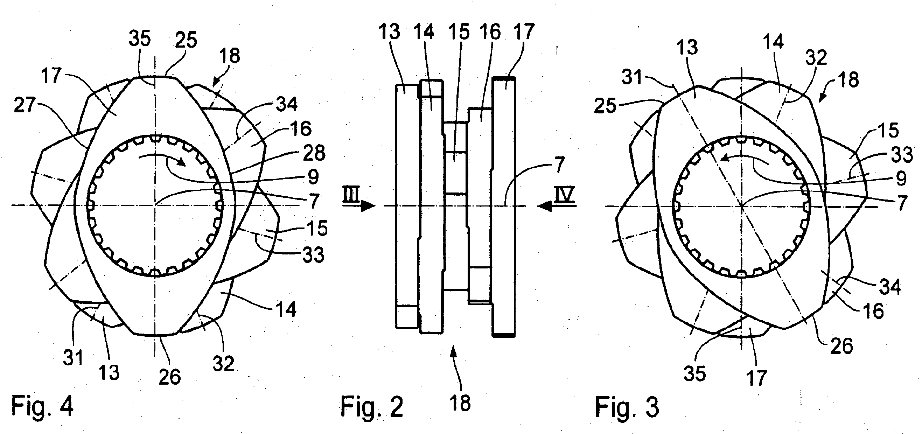

- Fig. 2: eine Seitenansicht auf einen Knetblock mit fünf Misch- und Knet-Scheiben,
- Fig. 3: eine Stirnansicht des Knetblocks gemäß dem Sichtpfeil III in Fig. 2,
- Fig. 4: eine weitere Stirnansicht des Knetblocks gemäß dem Sichtpfeil IV in Fig. 2 und
- Fig. 5: einen Querschnitt durch die Schneckenmaschine gemäß der Schnittlinie V-V in Fig. 1.

Die in der Zeichnung dargestellte Zwei-Wellen-Schneckenmaschine 1 wird von einem Motor 2 über eine Kupplung 3 und ein nachgeordnetes Getriebe 4 angetrieben. Im Gehäuse 5 der Schneckenmaschine 1 sind zwei einander in Form einer liegenden 8 durchdringende Gehäuse-Bohrungen 6, 6' ausgebildet, die zueinander parallele Achsen 7, 7' aufweisen. In den Bohrungen 6, 6' sind Schneckenwellen 8, 8' angeordnet, deren Achsen mit den Achsen 7, 7' zusammenfallen. Die Schneckenwellen 8, 8' werden über das Getriebe 4 gleichsinnig in einer Drehrichtung 9, 9' angetrieben.

Das Gehäuse 5 weist an einem dem Getriebe 4 benachbarten Ende einen Zuführtrichter 10 auf, durch den zu behandelndes bzw. aufzubereitendes Material zugeführt wird. Im Anschluss hieran sind auf den Schneckenwellen 8, 8' Schneckenelemente 11, 11' angebracht, durch die eine EinzugsZone 12 gebildet wird.

Im Anschluss hieran sind an den Schneckenwellen 8, 8' Misch- und Knet-Scheiben 13, 13', 14, 14', 15, 15', 16, 16' und 17, 17' drehfest angebracht, die beim dargestellten Ausführungsbeispiel jeweils einstückig als Knetblöcke 18, 18' ausgebildet sind. Im Bereich dieser Knetblöcke 18, 18' ist eine Misch- und Knet-Zone 19 gebildet. Hieran schließt sich eine Förder- und Druckaufbau-Zone 20 an, in der wiederum auf den Schneckenwellen 8, 8' Schneckenelemente 21, 21' drehfest angebracht sind. Im Anschluss an diese Schneckenelemente 21, 21' sind an den Schneckenwellen 8, 8' Schneckenspitzen 22, 22' ausgebildet, an die sich in Förderrichtung 23, also an dem dem Zuführtrichter 10 entgegengesetzten Ende, eine Düse 24 als Abschluss des Gehäuses 5 anschließt. Sowohl die jeweils paarweise angeordneten Schneckenelemente 11, 11' als auch die Misch- und Knet-Scheiben 13, 13' bis 17, 17' als auch die Schneckenelemente 21,21' sind ineinandergreifend, also miteinander kämmend, und zwar dicht kämmend, ausgebildet. Die drehenden Teile des Motors 2, der Kupplung 3 und des Getriebes 4 und die Schneckenwellen 8, 8' mit den Schneckenelementen 11, 11' und 21, 21' sowie den Misch- und Knet-Scheiben 13, 13' bis 17, 17' bilden einen Antriebsstrang.

Wie der Zeichnung entnehmbar ist, sind sowohl die Schneckenelemente 11, 11' und 21, 21' als auch die Misch- und Knet-Scheiben 13, 13' bis 17, 17' zweigängig ausgebildet. Die Scheiben 13, 13' bis 17, 17' weisen demzufolge Kämme 25, 25' und 26, 26' und Flanken 27, 27' bzw. 28, 28' auf, die jeweils in bekannter Weise sich beim Drehen in Drehrichtung 9, 9' aneinander vorbei bewegen. Die Kämme 25, 25' bzw. 26, 26' laufen unter Freilassung eines geringen Spaltes 29, 29', also mit geringem Spiel, zur Wand 30, 30' der Gehäuse-Bohrung 6, 6' um. Jeweils ein Kamm 25, 26 einer Misch- und Knet-Scheibe 13 bis 17 läuft mit geringem Spiel an einer Flanke 27', 28' der anderen jeweils im Paar zugeordneten Misch- und Knet-Scheibe 13' bis 17' vorbei und umgekehrt. Dies ist allgemein bekannt, und zwar für 2-gängige Misch- und Knet-Scheiben aus der EP 0 875 356 B1 (entsprechend US 6,048,088) oder für 1-gängige Misch- und Knet-Scheiben aus der EP 1 121 238 B1 (entsprechend US Ser. No. 09/806 605) oder für 3- oder 4-gängige Misch- und Knet-Scheiben aus der EP 0 160 124 A2 (entsprechend US 4,824,256).

Die hintereinander angeordneten Scheiben 13, 13' bis 17, 17' sind im Querschnitt quer zur Achse 7 bzw. 7' identisch ausgebildet. Jede einzelne Scheibe ist, wenn es sich um eine 2-gängige Scheibe handelt, doppelt spiegelsymmetrisch ausgebildet. Die Scheiben weisen einen Kammwinkel a bzw. a' und einen Flankenwinkel b bzw. b' auf, für die bei der 2-gängigen Ausgestaltung gilt a + b = a' + b' = 180° und a = a' und b = b'.

Mittig durch die Kämme 25, 26 bzw. 25', 26' und die jeweilige Achse 7, 7' sind Mittel-Ebenen 31, 31', 32, 32', 33, 33', 34, 34' und 35, 35' gelegt, wobei die beiden Mittel-Ebenen von in Förderrichtung 23 unmittelbar hintereinander angeordneten Misch- und Knet-Scheiben einen Kamm-Versatz-Winkel einschließen. Die Mittel-Ebenen 31, 32 der Scheiben 13, 14 schließen also einen Winkel c ein, während die Mittel-Ebenen 31', 32' der Scheiben 13' 14,' einen Winkel c' einschließen. Die Mittel-Ebenen 32, 33 der Scheiben 14, 15 schließen einen Winkel d ein, während die Mittel-Ebenen 32', 33' der Scheiben 14', 15' einen Winkel d' einschließen. Die Mittel-Ebenen 33, 34 der Scheiben 15, 16 schließen einen Winkel e ein, während die Mittel-Ebenen 33', 34' der Scheiben 15', 16' einen Winkel e' einschließen. Schließlich schließen die Mittel-Ebenen 34, 35 derScheiben 16, 17 einen Winkel f ein, während die Mittel-Ebenen 34', 35' der Scheiben 16', 17' einen Winkel f' einschließen. Die Kamm-Versatz-Winkel jedes Paares von Misch- und Knet-Scheiben 13 bzw. 13' oder 14 bzw. 14' usw. sind jeweils gleich, d. h. es gilt c = c', d = d', e = e' und f = f'. Andererseits gilt nicht, dass c, d, e und f bzw. c', d', e' und f' jeweils untereinander gleich sein müssen. Es gilt vielmehr, dass ein ganzzahliges Vielfaches der jeweiligen Kamm-Versatz-Winkel c, c', d, d', e, e', f, f' ungleich 360° ist. In anderen Worten heißt dies, dass der Kamm-Versatz-Winkel zwischen zwei in Förderrichtung 23 benachbarten Misch- und Knet-Scheiben nicht ganzzahlig in 360° enthalten ist. Daraus ergibt sich, dass auch bei mehreren hintereinander angeordneten Paaren von Misch- und Knet-Scheiben 13, 13' bis 17, 17' nicht zwei Paare von Misch- und Knet-Scheiben sich in einer identischen Eingriffsposition befinden.

Zur Erläuterung sei darauf hingewiesen, dass die von jeweils einem Paar von Misch- und Knet-Scheiben 13, 13' bis 17, 17' auf die Schneckenwellen 8, 8' ausgeübten Drehmomente über eine volle Umdrehung nicht konstant sind. Dies ergibt sich daraus, dass insbesondere bei Anordnung mehrerer Misch- und Knet-Scheiben-Paare hintereinander das zu bearbeitende Material, also Schmelze, Pulver usw., nur noch in Förderrichtung 23 ausweichen kann. Da über eine volle Umdrehung der Scheiben eines Scheiben-Paares die freien Querschnitte veränderlich sind, treten über eine Umdrehung jeder Schneckenwelle 8 bzw. 8' jeweils unterschiedliche Drehmomente auf. Die höchsten Drehmomente treten jeweils auf, wenn sich zwei Kämme 25, 25' bzw. 26, 26' im Bereich eines Zwickels 36 bzw. 36' befinden. Bei diesen Zwickeln 36, 36' handelt es sich um die Spitzen-Bereiche, die an der Durchdringungsstelle der Gehäuse-Bohrungen 6, 6' im Gehäuse 5 ausgebildet sind. In dieser angesprochenen Position ist der freie Querschnitt der Gehäuse-Bohrungen 6, 6' besonders klein. Wenn entsprechend der allgemeinen Praxis die Kamm-Versatz-Winkel zwischen den Misch- und Knet-Scheiben ganzzahlig in 360° aufgehen und bei 2-gängigen Misch- und Knet-Scheiben ganzzahlig in 180° aufgehen, insbesondere, wenn sie bei 2-gängigen Scheiben 45° betragen, dann treten diese Drehmomentschwankungen über jeweils einer Umdrehung der Schnecken-Wellen 8, 8' mit einer Frequenz auf, die von der Drehzahl der Schnecken-Wellen 8, 8' abhängt. Wenn eine Eigenfrequenz des Antriebsstranges der vorerwähnten Frequenz der Drehmomentschwankungen entspricht, dann würden diese Drehmomentamplituden bei der konventionellen Anordnung der Misch- und Knet-Scheiben mit Kamm-Versatz-Winkeln, die ganzzahlig in 360° enthalten sind, an den Resonanzstellen unzulässig verstärkt. Durch die geschilderten Maßnahmen wird dieses Problem weitgehend unterbunden.

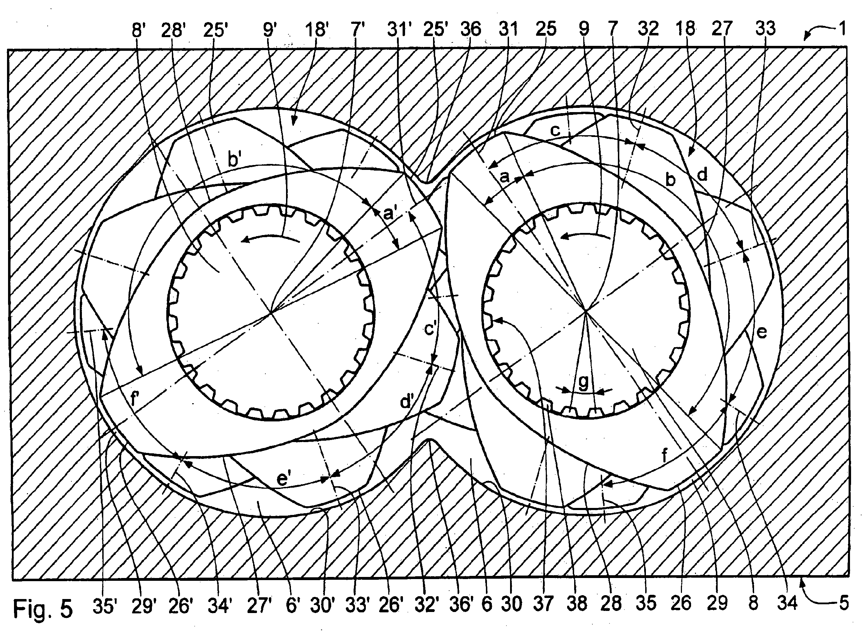

Wie in Fig. 5 erkennbar ist, weisen die Schneckenwellen 8, 8' eine Außen-Profil-Verzahnung auf, in die eine Innen-Profil-Verzahnung 37 der Mischund Knet-Scheiben 13, 13' bis 17, 17' eingreift, wodurch eine drehfeste Verbindung zwischen den Scheiben und den Schneckenwellen 8, 8' hergestellt wird. Entsprechendes gilt für die Schneckenelemente 11, 11' und 21, 21'. Die Verzahnung 37 weist einen Teilungs-Winkel g auf, der ganzzahlig in 360° aufgeht. Bei 24 über dem Umfang angeordneten Zähnen 38 gilt g = 15°, bei 36 Zähnen 38 gilt g = 10°, bei 12 Zähnen 38 über dem Umfang gilt g = 30° usw. Wenn mehrere Scheiben 13, 13' bis 17, 17' hintereinander angeordnet sind, dann ist es von Vorteil, wenn die Summe der Kamm-Versatz-Winkel c + d + e + f = ein ganzzahliges Vielfaches von g ist. In diesem Fall können weitere gleichartige Knetblöcke oder Schneckenelemente ohne Versatz oder zusätzliche spezielle Übergangselemente angeschlossen werden.

## Patentansprüche

1. Schneckenmaschine
- mit mindestens zwei zueinander parallelen, einander durchdringenden Gehäuse-Bohrungen (6, 6'),
- mit in den Gehäuse-Bohrungen (6, 6') angeordneten, drehantreibbaren Schneckenwellen (8, 8') und
- mit mehreren auf den Schneckenwellen (8, 8') hintereinander angeordneten, paarweise ineinander greifenden Misch- und Knet-Scheiben (13, 13' bis 17, 17'),
-- die mindestens einen Kamm (25, 25', 26, 26') und mindestens eine Flanke (27, 27', 28, 28') aufweisen,
-- wobei mehrere Misch- und Knet-Scheiben (13 bis 17 bzw. 13' bis 17') einen einstückigen Knetblock (18 bzw. 18') bilden,
-- wobei unmittelbar hintereinander angeordnete Misch- und Knet-Scheiben (13 bis 17 bzw. 13' bis 17') jeweils einen Kamm-Versatz-Winkel (c, d, e, f; c', d', e', f') einschließen, wobei gilt, dass ein ganzzahliges Vielfaches des jeweiligen Kamm-Versatz-Winkels (c, d, e, f; c', d', e', f') ungleich 360° ist,
-- wobei keine der hintereinander angeordneten Misch- und Knet-Scheiben (13 bis 17 bzw. 13' bis 17') deckungsgleich zueinander angeordnet sind,
wobei die Knetblöcke (18, 18') mittels einer Verzahnung (37) mit den Schneckenwelle (8, 8') verbindbar sind, wobei die Verzahnungen (37) in gleichen Winkelabständen angeordnete Zähne (38) mit einem Teilungs-Winkel (g) zwischen benachbarten Zähnen (27) aufweise und die Summe der Kamm-Versatz-Winkel (c + d + e + f bzw. c' + d' + e' + f) mehrerer Misch- und Knet-Scheiben (13 bis 17 bzw. 13' bis 17') eines Knetblocks (18 bzw. 18') ein ganzzahliges Vielfaches des Teilungs-winkels (g) ist,
**dadurch gekennzeichnet,**
**dass** der jeweilige Kamm-Versatz-Winkel (c, d, e, f; c, d', e', f) nicht ganzzahlig in 360° enthalten ist.

2. Schneckenmaschine nach Anspruch 1, **dadurch gekennzeichnet, dass** die Misch- und Knet-Scheiben n-gängig ausgebildet sind, wobei gilt: n = 1, 2 ,3 oder 4.

3. Schneckenmaschine nach Anspruch 2, **dadurch gekennzeichnet, dass** die Misch- und Knet-Scheiben (13, 13' bis 17, 17') 2-gängig ausgebildet sind.

4. Schneckenmaschine nach einem der Ansprüche 1 bis 3, **dadurch gekennzeichnet,**
**dass** die Schneckenwellen (8, 8') gleichsinnig antreibbar sind.

## Claims

1. Screw-type extruding machine,
- comprising at least two parallel, intersecting casing bores (6, 6');
- comprising rotarily drivable screw shafts (8, 8') which are disposed in the casing bores (6, 6'); and
- comprising several mixing and kneading disks (13, 13' to 17, 17') which are successively disposed on the screw shafts (8, 8') and interengage in pairs,
-- having at least one crest (25, 25', 26, 26') and at least one flank (27, 27', 28, 28');
-- wherein several mixing and kneading disks (13 to 17 and 13' to 17') constitute an integral kneading block (18 and 18');
-- wherein directly successive mixing and kneading disks (13 to 17 and 13' to 17') make an angle of crest misalignment (c, d, e, f; c', d', e', f), it applying that an integral multiple of the respective angle of crest misalignment (c, d, e, f; c', d', e', f) is unequal to 360°;
-- wherein none of the successive mixing and kneading disks (13 to 17 and 13' to 17') are super-imposed;
wherein the kneading blocks (18, 18') are connectable to the screw shafts (8, 8') by a serration (37), the serrations (37) having teeth (38) that are disposed at equal angular distances, adjoining teeth (27) making a pitch angle (g), and the sum of the angles of crest misalignment (c + d + e + f and c' + d' + e' + f') of several mixing and kneading disks (13 to 17 and 13' to 17') of a kneading block (18 and 18') being an integral multiple of the pitch angle (g),
**characterized**
**in that** the respective angle of crest misalignment (c, d, e, f; c', d', e', f') is not contained integrally in 360°.

2. Screw-type extruding machine according to claim 1, **characterized in that** the mixing and kneading disks are n-flight, with n = 1, 2, 3 or 4 applying.

3. Screw-type extruding machine according to claim 2, **characterized in that** the mixing and kneading disks (13, 13' to 17, 17') are two-flight.

4. Screw-type extruding machine according to one of claims 1 to 3, **characterized**
**in that** the screw shafts (8, 8') are drivable in the same direction.

## Revendications

1. Machine à vis sans fin, comprenant :
- au moins deux alésages de carter (6, 6') parallèles entre eux et s'interpénétrant,
- des arbres à vis sans fin (8, 8'), disposés dans les alésages de carter (6, 6') et pouvant être entraînés en rotation, et
- plusieurs disques de malaxage et de pétrissage (13, 13' à 17, 17') disposés les uns derrière les autres sur les arbres à vis sans fin (8, 8') et venant en prise les uns dans les autres par paires,
-- qui présentent au moins un peigne (25, 25', 26, 26') et au moins un flanc (27, 27', 28, 28'),
-- plusieurs disques de malaxage et de pétrissage (13 à 17 ou 13' à 17') formant un bloc de pétrissage (18 ou 18') d'une seule pièce,
-- des disques de malaxage et de pétrissage (13 à 17 ou 13' à 17') disposés directement les uns derrière les autres formant respectivement un angle de décalage de peigne (c, d, e, f; c', d', e', f'), tel qu'un multiple entier de l'angle de décalage respectif (c, d, e, f; c', d', e', f') des peignes est différent de 360°,
-- aucun des disques de malaxage et de pétrissage (13 à 17 ou 13' à 17') disposés les uns derrière les autres n'étant agencé de manière mutuellement coïncidente,
les blocs de pétrissage (18, 18') étant aptes à être reliés aux arbres à vis sans fin (8, 8') au moyen d'une denture (37), les dentures (37) présentant des dents (38) disposées à écarts angulaires égaux en formant un pas angulaire (g) entre dents (27) adjacentes et la somme des angles de décalage (c + d + e + f ou c' + d' + e' + f') des peignes de plusieurs disques de malaxage et de pétrissage (13 à 17 ou 13' à 17') d'un bloc de pétrissage (18 ou 18') étant un multiple entier du pas angulaire (g),
**caractérisée**
**en ce que** l'angle de décalage respectif (c, d, e, f; c', d', e', f') des peignes n'est pas contenu intégralement en 360°.

2. Machine à vis sans fin selon la revendication 1, **caractérisée**
**en ce que** les disques de malaxage et de pétrissage sont conçus à 'n' filets, n' étant égal à 1, 2, 3 ou 4.

3. Machine à vis sans fin selon la revendication 2, **caractérisée**
**en ce que** les disques de malaxage et de pétrissage (13, 13' à 17, 17') sont conçus à 2 filets.

4. Machine à vis sans fin selon l'une des revendications 1 à 3, **caractérisée**
**en ce que** les arbres à vis sans fin (8, 8') peuvent être entraînés dans le même sens.
